# FASCICULE DE BREVET EUROPEEN

(11) **EP 2 066 490 B1**
(45) Date de publication et mention de la délivrance du brevet: **28.04.2010**
(21) Numéro de dépôt: 07820229.8
(22) Date de dépôt: 14.09.2007
(51) Int. Cl.: B29C 65/22, B65B 51/26

(54) **DISPOSITIF DE SOUDAGE DE SAC EN PLASTIQUE ET PROCEDE DE CHAUFFAGE DE SES RUBANS CHAUFFANTS**
SCHWEISSGERÄT FÜR KUNSTSTOFFBEUTEL UND VERFAHREN ZUR ERHITZUNG SEINER HEIZSTREIFEN
WELDING DEVICE FOR PLASTIC BAGS AND METHOD OF HEATING ITS HEATING STRIPS

(30) Priorité: 18.09.2006 FR 0653794
(43) Date de publication de la demande: 10.06.2009
(73) Titulaire: Areva NC, 75009 Paris (FR)
(72) Inventeur: LALLI, Franck, 84120 Pertuis (FR); NEGRIER, Gérard, 04220 Corbieres (FR)
(74) Mandataire: Ilgart, Jean-Christophe
(86) Numéro de dépôt international: PCT/EP2007/059726
(87) Numéro de publication internationale: WO 2008/034775

(56) Documents cités:
- DE-A1- 3 113 340
- DE-A1- 3 304 172
- JP-A- 9 292 084

## Description

### Domaine de l'invention

L'invention concerne le domaine du soudage des sacs plastiques, tels que ceux utilisés pour le confinement d'objets et de matériels contaminés et devant être fermés dans une boîte à gants, dont ils sont ensuite extraits.

Elle concerne en particulier la manière de d'alimentater en électricité les rubans chauffants d'une pince de soudage.

L'application principale du dispositif et du procédé selon l'invention concerne l'industrie nucléaire et plus exactement le maniement de matériels toxiques en boîte à gants.

### Art antérieur et problème posé

L'industrie nucléaire nécessite, dans le cadre de certaines de ses activités industrielles relatives au retraitement ou au démantèlement, d'extraire diverses matières et matériels se trouvant dans des boîtes à gants. L'extraction proprement dite se fait au moyen de sacs plastiques qui sont couplés fonctionnellement à une boîte à gants. On fait donc transiter la matière à extraire de la boîte à gants vers le sac plastique, qui se trouve au préalable dans la boîte à gants. On effectue ensuite les soudures nécessaires sur le sac plastique, afin de le rendre parfaitement étanche.

Dans certains cas, la nature et la toxicité des matériels et produits manipulés impose une grande qualité dans les soudages des sacs plastiques dans lesquels ils sont enfermés, dans le but de garantir la sécurité des agents et opérateurs qui effectuent ces opérations et la non propagation des éléments radioactifs toxiques transférés.

Au jour du dépôt de cette demande de brevet, des technologies de mises en oeuvre de ce type de soudage de sacs plastiques dominent le marché des équipements de soudage : le générateur à haute fréquence et l'ensemble à base de résistances chauffantes. Ces deux technologies présentent des inconvénients qui, pour la plupart d'entre eux, sont connus depuis fort longtemps et liés à la technologie employée.

Par exemple, en ce qui concerne le générateur à haute fréquence, les équipements actuels présentent des volumes très conséquents. Il s'ensuit une maniabilité des plus réduite. Un autre défaut majeur de ces équipements réside dans le danger qui est lié à leur utilisation, car cette technologie met en oeuvre des puissances de plusieurs kilowatts, avec des tensions électriques comprises entre 3 et 5 kilovolts et avec des courants avoisinants 1 ampère, ce qui présente des risques de brûlures qu'il ne faut pas négliger, de nombreux cas de brûlures ayant déjà occasionnés des arrêts de travail. D'autre part, ces générateurs à haute fréquence sont équipés de triodes de puissance qui sont des composants qui relèvent d'une technologie très ancienne et dont l'approvisionnement demeure difficile et relativement onéreux. Enfin, ces équipements sont volumineux et difficiles à employer dans des endroits où l'accès est limité.

Un deuxième type de générateurs à résistance chauffante est nettement moins sophistiqué. En effet, ces ensembles associent un générateur électrique avec une résistance chauffante qui se présente sous la forme d'un ruban métallique résistif. Ils sont nettement moins dangereux que le générateur à haute fréquence et demeurent toutefois encombrants. De plus, les soudures produites par ce type d'appareillage sont difficilement reproductibles et nécessitent de nombreux réglages, ce qui rend leur usage très délicat. En ce qui concerne les pinces associées à ces différents types de générateurs, elles ne sont pas très maniables, car elles sont relativement lourdes. De plus, elles ne sont pas très faciles à ouvrir de par la présence d'un ressort, qui est nécessaire pour maintenir la pince serrée sur le matériau à souder.

Le but de l'invention est donc de remédier à ces inconvénients en proposant un autre système de soudage des sacs plastiques par résistances chauffantes.

### Résumé de l'invention

A cet effet, un premier objet principal de l'invention est un procédé de chauffage de rubans chauffants pour une pince à souder, chaque ruban chauffant étant alimenté en électricité individuellement.

Selon l'invention, on se propose d'envoyer dans chaque ruban chauffant des ondes d'énergie électrique successives et espacées de façon déterminée et décalées d'un ruban par rapport à l'autre.

Dans la réalisation principale, lorsqu'on utilise un nombre déterminé N de rubans chauffants, la distribution d'énergie est de type multiplexée, les ondes ayant chacune une durée de 1/N pour chaque cycle de chauffage, chaque onde étant décalée par rapport aux autres d'une valeur de 1/N, de manière à ce que la puissance électrique envoyée globalement soit constante et multiplexée sur les N rubans chauffants.

Il est envisagé de pouvoir moduler en largeur les ondes envoyées aux rubans chauffants.

Il est également envisagé de mesurer la température des rubans chauffants.

Un deuxième objet principal de l'invention est un dispositif de soudage pour souder l'ouverture de sacs plastiques dans le but de les fermer hermétiquement, ce dispositif comprenant :
- une pince comprenant elle-même :
   - un corps,
   - une première mâchoire de serrage et possédant des premiers moyens de commande et prolongeant le corps ; et
   - une deuxième mâchoire de serrage ;
- plusieurs rubans chauffants étant installés longitudinalement sur au moins une des deux mâchoires de serrage ; et
- un dispositif de commande et d'alimentation électrique relié à la pince par un cordon d'alimentation pour alimenter chacun des rubans chauffants.

Selon l'invention, le dispositif d'alimentation possède des moyens de multiplexage de l'énergie électrique envoyés à chaque ruban chauffant, à savoir un régulateur à triple action du type PID, pour envoyer dans ces rubans chauffants des ondes d'énergie électrique successives et décalées dans le temps d'un ruban chauffant par rapport à un autre, et les moyens de commande et d'alimentation comprennent des moyens de modulation en largeur d'impulsions des ondes.

Il est également prévu d'utiliser des moyens de motorisation contrôlés de la mâchoire supérieure de serrage montée mobile par rapport à l'autre mâchoire de la pince.

Dans ce cas il est avantageux d'utiliser comme moyen de serrage un moteur électrique entraînant un moteur vis/écrou, l'écrou étant relié à la mâchoire supérieure de la pince.

Des moyens de limitation du couple de serrage peuvent également compléter l'ensemble.

Un thermocouple peut être également placé sous chaque ruban chauffant pour mesurer la température.

Enfin, les premiers moyens de commande montés sur la pince sont limités pour que l'opérateur n'ait pas à faire des réglages détaillés.

### Liste des figures

L'invention et ses différentes caractéristiques techniques seront mieux décrites à la lecture de la description suivante, accompagnée de quatre figures représentant respectivement :
- figure 1, en vue cavalière partiellement explosée, le dispositif selon l'invention ;
- figure 2, un schéma montrant la position des thermocouples par rapport aux rubans chauffants ;
- figure 3, trois graphes relatifs aux cycles de chauffage de trois rubans chauffants ;
- figure 4, un schéma relatif au chauffage d'un ruban chauffant.

### Description détaillée d'une réalisation de l'invention

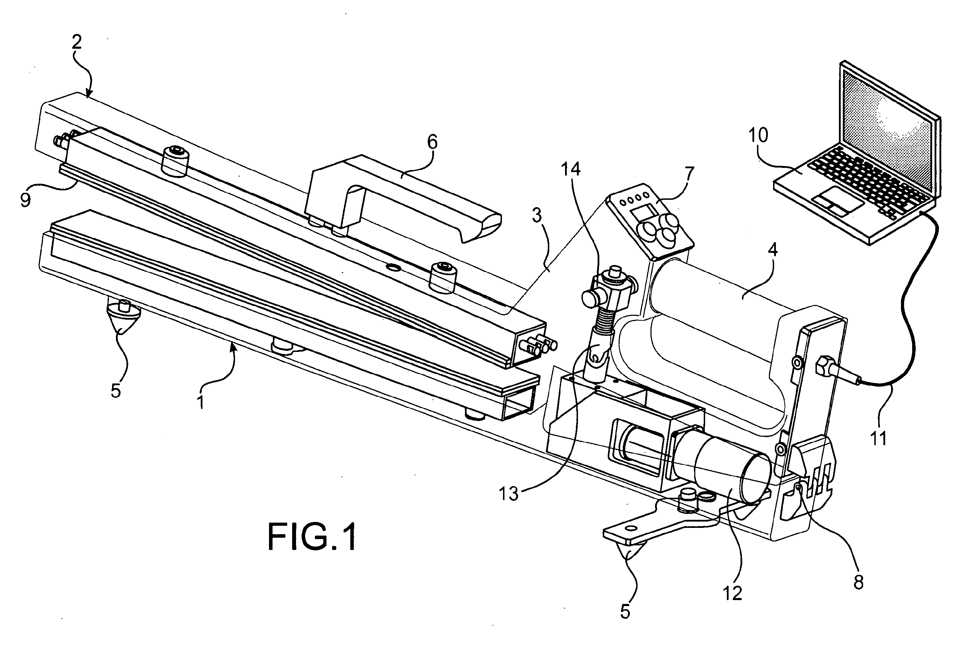

La figure 1 montre une réalisation préférentielle du dispositif selon l'invention. Les principaux éléments de la pince sont une mâchoire inférieure 1, une mâchoire supérieure 2, un boîtier 3 fixé sur la mâchoire supérieure 2. Cet ensemble se complète d'une articulation 8 permettant à la mâchoire supérieure 2 de pivoter par rapport à la mâchoire inférieure 1. On note que la mâchoire supérieure 2 peut être montée pivotante par rapport à la mâchoire inférieure 1 par l'intermédiaire de silentblocs pouvant supporter l'écrasement et permettant de serrer parallèlement le sac pendant l'opération de soudage.

La mâchoire inférieure 1 est équipée d'au moins trois pieds 5, dont un placé vers l'extrémité distale de la mâchoire inférieure 1. Les deux autres sont placés près de l'articulation 8.

La mâchoire supérieure est dotée d'une poignée de travail 6 fixée sur cette dernière. Le boîtier 3 est complété d'une poignée de préhension 4 placée vers l'articulation 8 et possède un pupitre de commande 7. Ainsi, l'opérateur peut contrôler quelques éléments de soudage, à savoir le temps, la température et la bande de rubans chauffants utilisés. Au moyen d'un bouton-poussoir, il commande l'ouverture et la fermeture du cycle de chauffage.

Dans cette mâchoire inférieure 1, du côté de l'articulation 8 se trouve un groupe de motorisation 12 permettant d'actionner une vis 13 d'un système vis écrou, dont l'écrou 14 est solidaire de la mâchoire supérieure 2. Ainsi, un actionnement du groupe moteur permet l'ouverture et la fermeture de la mâchoire supérieure 2 sur la mâchoire inférieure 1. Le groupe moteur est principalement constitué d'un petit moteur électrique. Il peut être avantageusement complété d'un moyen de limitation du couple de serrage.

L'ensemble de la pince se complète évidemment par un dispositif de commande et d'alimentation électrique 10 relié à la pince par un cordon d'alimentation 11.

Le dispositif de commande et d'alimentation 10 peut être doté de deux sources différentes de courants électriques, à savoir une source de courant alternatif à 24 volts ou une source de courant continu par batterie. Ceci permet une autonomie des plus complète quant à l'ensemble de l'installation. Il est à noter que le corps de pince 3 est habité par une platine électronique de commande assurant la gestion de l'ensemble de la pince et recevant les quelques données de la part de l'opérateur, par l'intermédiaire du pupitre de commande 7.

Les rubans chauffants destinés à effectuer la soudure des sacs au moyen de la pince selon l'invention sont placés sur la face inférieure 9 de la mâchoire supérieure 2.

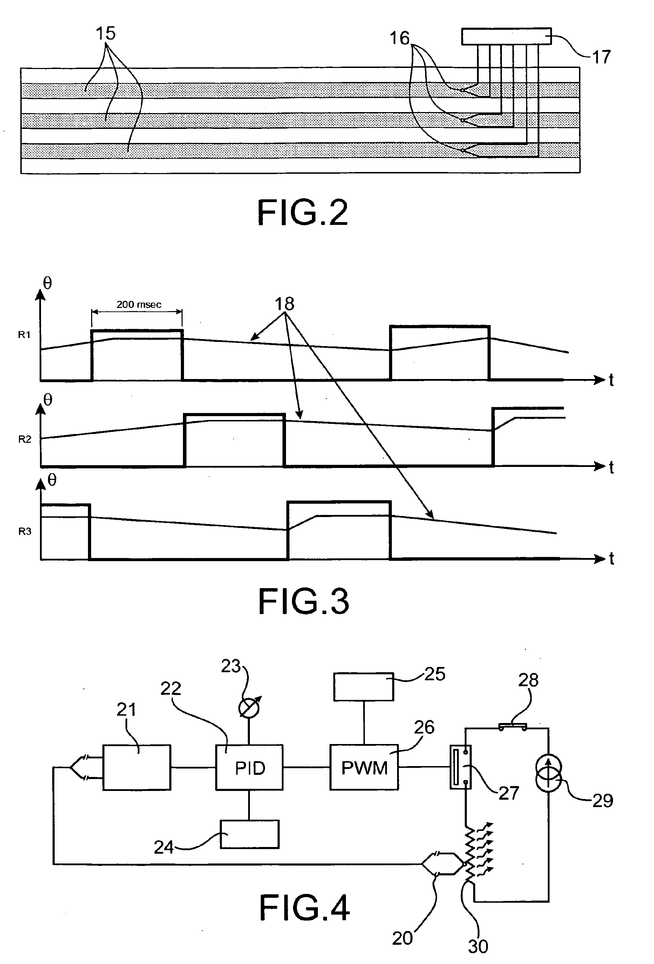

La figure 2 représente trois de ses rubans chauffants 15 placés parallèlement les uns par rapport aux autres et longitudinalement sous la mâchoire inférieure 2. On utilise pour chaque ruban chauffant 15 un détecteur de chaleur, tel qu'un thermocouple 16. En d'autres termes, un thermocouple 16 est placé sous chacun des rubans chauffants 15. Chacun de ceux-ci est relié à un récepteur de données 17 faisant partie du dispositif de commande et d'alimentation 10.

Le fonctionnement de l'ensemble, le procédé de chauffage utilisé et les différents éléments de commande et de mise en place de ce procédé sont décrits dans les paragraphes qui suivent.

Dans l'exemple de réalisation choisi, trois rubans chauffants sont utilisés.

L'idée principale de l'invention est de ne pas alimenter les trois rubans chauffants 15 en même temps pendant la phase de soudure. En effet, les chauffer tous en même temps nécessiterait l'utilisation d'un générateur massif et volumineux. On propose donc de distribuer l'énergie électrique de façon séquentielle, un seul ruban chauffant 15 étant alimenté à la fois, par exemple avec une période de 200 millisecondes.

La figure 3 montre trois graphes relatifs respectivement aux trois rubans chauffants. Les courbes tracées en traits forts et en forme de créneaux sont représentatives de l'énergie électrique envoyée dans chaque ruban chauffant. Les courbes 18 tracées en traits moyens représentent la température de chaque ruban chauffant. On remarque que chaque ruban chauffant est chauffé de façon décalée par rapport aux autres. Ainsi, l'énergie électrique envoyée dans le système est globalement constante. En effet, lorsqu'on cesse d'envoyer de l'énergie électrique dans le premier ruban chauffant, on commence à alimenter le second, et ainsi de suite avec le second et le troisième rubans.

Ainsi, il est possible de maîtriser parfaitement l'énergie distribuée par l'ensemble de l'installation dans les rubans chauffants, afin de garantir la qualité et la répétabilité des soudures ainsi générées sans devoir utiliser un générateur trop puissant. On utilise un générateur de courant multiplexé et comme moyen de multiplexage de l'énergie électrique un régulateur à triple action du type PID, c'est-à-dire proportionnelle-intégrale-dérivée. On utilise également une distribution d'énergie au moyen de modulation de largeur d'impulsion, et des moyens de mesure de la température sous chaque ruban chauffant sous la forme de thermocouples. Ainsi, il est possible de gérer au plus près l'énergie distribuée dans chaque ruban chauffant, tout en utilisant des semi-conducteurs existants sur le marché. L'utilisation d'un régulateur à triple action du type PID assure une température régulée au niveau de chaque ruban chauffant.

Les trois soudures se faisant en une seule opération, chaque ruban chauffant qui est constitué d'une résistance, doit être porté à une température donnée pour atteindre la température de fusion du plastique constituant le sac à fermer. En effet, comme le montrent les courbes 18, entre chaque phase de chauffage, le ruban chauffant refroidit légèrement, mais pas suffisamment pour entraver le processus de soudage. Si l'on veut minimiser les amplitudes de température près des résistances constituant le ruban chauffant pendant les phases de soudage, on se doit de travailler avec des constantes de temps inférieures à la seconde. On choisit, par exemple, 200 ms pour la phase d'activation de chaque ruban chauffant, ce qui donne une phase de repos de 400 ms pendant laquelle les rubans chauffants ne sont plus alimentés.

En conséquence, le temps d'un cycle est dans ce cas de 600 ms. Le régulateur à triple action est piloté par un microcontrôleur INTEL du type 8051. L'ensemble est associé au système de mesure de température, qui peut utiliser dans ce cas un thermocouple du type K dont la gamme d'utilisation correspond à l'application envisagée. Dans la présente application, l'action dérivée est mise à zéro car elle n'est pas utilisée.

Un dispositif d'antisaturation est implémenté sur l'algorithme du régulateur à triple action de type PID. On dispose ainsi de trois dispositifs de ce type distinct avec, pour chacun d'eux, ses propres paramètres de réglage, ainsi que son propre contexte temporel.

Des préamplificateurs de thermocouples de type MAX 6675 sont associés au microcontrôleur, possèdent un système de compensation de soudure froide en interne et sont interrogés par voie numérique avec un protocole du type NISO/MOSI propre à ce circuit intégré.

Concernant les thermocouples utilisés sous les rubans chauffants, il est prévu de les choisir de faible diamètre, afin de minimiser les constantes de temps et de les placer au plus près des zones de chauffe, sans toutefois rentrer en contact avec celles-ci, afin que la prise de mesure soit très proche de la réalité.

Un bus de transmission numérique, de type 12C, a été implémenté dans le dispositif de commande et d'alimentation, afin de communiquer avec une mémoire du type EEPROM, à accès en série, qui sert de zone de stockage pour les paramètres fonctionnels de la pince à souder.

La figure 4 montre un ensemble de commande d'un ruban chauffant. La mesure de température est donc effectuée par un thermocouple 20 sur le ruban chauffant 30. Elle est transmise au régulateur à triple action du type PID, par l'intermédiaire d'un transmetteur de température 21. Elle est comparée à des températures de consigne 23 et à d'autres paramètres 24. Un signal issu du régulateur à triple action PID 22 est envoyé à un générateur 26 du type PWM qui génère, à l'aide d'une base de temps 25, des impulsions à largeur variable, qui va alimenter les rubans chauffants 30 par l'intermédiaire de moyens de commutation de puissance 27, tels que des relais statiques de courant alternatif. L'opérateur peut intervenir au moyen d'un commutateur 28, l'ensemble étant alimenté en électricité par un générateur ou une batterie 29. Le modulateur de largeur d'impulsions permet de faire varier, selon le calcul issu du régulateur à triple action PID 22, la valeur du temps d'activation pour chaque résistance constituant chacune un ruban chauffant 30.

On note, dans la réalisation envisagée, qu'il est prévu que l'opérateur ne possède que cinq temps de cycles programmés à l'avance pour lui simplifier les opérations, tout en lui permettant de s'adapter à différentes situations. Toutefois, le dispositif de commande et d'alimentation possède beaucoup de possibilités de réglage de nombreux autres paramètres, tels que la température de consigne, les coefficients relatifs au régulateur à triple action PID, lui permettant de s'adapter à divers types de matériaux à souder. Les paramètres sont mis en mémoire dans la pince et une liaison au dispositif de commande et d'alimentation permet de visualiser et modifier ces paramètres, afin de s'adapter à différentes configurations de soudage.

Ainsi, une certaine modulabilité permet à l'ensemble de l'équipement d'être utilisée facilement.

La qualité du serrage de la pince a une influence importante sur la qualité de la soudure à effectuer et permet de s'assurer d'une certaine reproductibilité dans le temps. De plus, afin de s'assurer de la maîtrise du couple de serrage, une mesure du courant d'alimentation du moteur est effectuée, la tension étant appliquée à un convertisseur analogique-numérique du type LT 1298 de LINEAR TECHNOLOGY. Ainsi, le microcontrôleur dispose, lors du serrage, de l'information relative au couple du moteur, directement traduite en numérique, par l'intermédiaire d'un convertisseur du type convertisseur analogique-numérique. L'intégration de l'image du couple de serrage est donc effectuée et l'alimentation électrique du moteur est coupée dès qu'une valeur de seuil est atteinte. La motorisation du serrage de la pince procure donc une facilité d'utilisation.

A propos de la source d'alimentation repérée 29 sur la figure 4, la source normale en énergie électrique est bien sûr le courant alternatif, tel que fourni par le secteur à la tension de 220 volts. Dans le cas de l'adaptation en tension pour alimenter une pince à souder, telle que celle qui est présentée, on utilise un transformateur-abaisseur disposant d'une puissance de quelques centaines de volts ampères qui délivre la tension de 24 volts.

Pour permettre de faire des soudures dans des endroits difficiles d'accès où l'alimentation par secteur n'est pas possible, on dote l'ensemble d'une batterie de courant continu pour assurer l'alimentation électrique. Le premier avantage d'un tel dispositif est l'autonomie. L'autre avantage est de pouvoir choisir l'accumulateur en fonction du nombre de soudures à effectuer.

Il faut noter que les rubans chauffants sont maintenus tendus et raccordés par une connectique, logée à l'intérieur du corps de pince 3 et étant inacessible à l'utilisateur.

On réalise ainsi un ensemble pince-dispositif de commande et d'alimentation ne dépassant pas le poids de 4 kg.

Une description plus précise va être faite maintenant du fonctionnement de l'ensemble du dispositif et qui est réalisé au moyen des programmes implantés au sein du microcontrôleur.

Le coeur des moyens de commande et d'alimentation est constitué par une horloge cadencée sur une période de deux millisecondes et qui sert de base de temps à tout l'ensemble.

La demande de soudage est réalisée au moyen du bouton-poussoir du pupitre de commande 7, assortie d'un temps d'appui, minimum de quelques secondes. L'interrogation de l'état du bouton-poussoir est permanente. Le programme de gestion de la pince possède une consigne mémorisée et figée, sachant que l'utilisateur possède cinq temps de cycle programmés.

Pendant les phases de repos ou de non utilisation de la pince, le déroulement du programme est identique à celui d'une séquence de chauffage à la valeur de consigne près. Cette consigne est nulle pendant la période d'inactivité de la pince. Par contre, si une demande de soudage est effectuée, la mémoire EEPROM fournit la valeur de la consigne et celle-ci devient alors effective. Le chauffage de rubans chauffants débute jusqu'à atteindre la température de consigne. Le régulateur à triple action du type PID fait en sorte que la température sur chaque ruban chauffant soit stable et conforme à la consigne.

Une fois le cycle terminé, on entre dans un cycle de refroidissement qui est signalé à l'utilisateur et nécessaire pour que la soudure ne se déchire pas à l'ouverture de la pince. A la fin de la période de refroidissement, le système revient à son état initial avec la consigne de remise à zéro.

Les informations relatives à l'état fonctionnel de la pince sont disponibles sur une liaison sérielle asynchrone, de type RS 232. Parmi celles-ci se trouvent, entre autres, les températures des trois rubans chauffants, ainsi que la possibilité de modifier tous les paramètres. Cette liaison permet de commander la pince, ce qui peut être utilisé pour affiner les paramètres de régulation et peut se révéler fort utile pour la maintenance de l'ensemble.

### Avantages de l'invention

Le matériel est facilement sécurisé pour l'utilisateur.

La conception est simple.

Le poids est réduit et la maniabilité est donc accrue.

On obtient une grande fiabilisation des soudures à effectuer.

Il est possible d'effectuer des soudures dans des endroits difficiles d'accès et/ou dépourvus d'alimentation en électricité.

## Revendications

1. Dispositif de soudage pour souder l'ouverture de sacs plastiques afin de les fermer hermétiquement et comprenant :
- une pince (3) comprenant elle-même :
. un corps de pince (3) ;
une mâchoire inférieure (1) ; et
. une mâchoire supérieure (2) montée mobile par rapport à la mâchoire inférieure (1),
plusieurs rubans chauffants (15) étant installés longitudinalement sur une des deux mâchoires, le corps de pince (3) étant solidaire de la mâchoire supérieure (2) ; et
- un dispositif de commande et d'alimentation (10) relié à la pince (3) par un cordon d'alimentation (11) pour alimenter chacun des rubans chauffants (15),
**caractérisé en ce que** le dispositif de commande et d'alimentation (10) possède des moyens de multiplexage de l'énergie électrique envoyée dans chacun des rubans chauffants (15), constitués notamment d'un régulateur à triple action de type PID (22), pour envoyer dans ces rubans chauffants (15) des ondes d'énergie successives et décalées dans le temps d'un ruban chauffant (15) par rapport à un autre, de façon à ce que, à chaque instant, la puissance électrique n'est envoyée qu'à un seul ruban chauffant (15),
et **en ce que** le dispositif de commande et d'alimentation (10) comprend des moyens de modulation de la largeur d'impulsions.

2. Dispositif de soudage selon la revendication 1, **caractérisé en ce qu'**on utilise un thermocouple (16) pour chaque ruban chauffant (15) pour effectuer un contrôle de température.

3. Dispositif de soudage selon la revendication 1, **caractérisé en ce qu'**il comprend des moyens de motorisation contrôlé (11, 12, 13, 14) de la mâchoire supérieure (2) par rapport à la mâchoire inférieure (1).

4. Dispositif de soudage selon la revendication 3, **caractérisé en ce que** le moyen de motorisation contrôlé comprend :
- un moteur électrique (12) entraînant un système vis-écrou (13, 14), l'écrou (14) étant relié à la mâchoire supérieure (2) ; et
- des moyens de limitation du couple de serrage appliqué aux mâchoires (1, 2).

5. Dispositif selon la revendication 1,
**caractérisé en ce que** le dispositif de commande et d'alimentation (10) possède une source de courant alternatif.

6. Dispositif selon la revendication 1,
**caractérisé en ce que** le dispositif de commande et d'alimentation (10) possède une source de courant continu par batterie.

7. Procédé de chauffage d'un ruban chauffant (15) de pince à souder, chaque ruban chauffant (15) étant alimenté individuellement,
**caractérisé en ce qu'**il consiste à envoyer dans chaque ruban chauffant (15) les ondes d'énergie électrique successives et espacées de façon déterminée et décalées d'un ruban par rapport à un autre, de sorte que, à chaque instant, un seul ruban chauffant (15) soit alimenté.

8. Procédé selon la revendication 7, pour chauffer un nombre déterminé N de rubans chauffants (15), **caractérisé en ce que** les ondes ont une durée de 1/N, chaque onde étant décalée par rapport aux autres d'une valeur de 1/N, pour que la puissance envoyée globalement dans l'ensemble soit constante, c'est-à-dire que l'énergie soit multiplexée.

9. Procédé de chauffage selon la revendication 8, **caractérisé en ce qu'**on effectue une modulation de la largeur des ondes.

10. Procédé de chauffage selon la revendication 7, **caractérisé en ce qu'**on effectue une mesure de la température des rubans chauffants.

## Claims

1. Welding device to weld the opening of plastic bags in order to seal them hermetically and comprising:
- a tong (3) itself comprising:
. a tong body (3);
. a lower jaw (1); and
. an upper jaw (2) moveably mounted in relation to the lower jaw (1),
several heating strips (15) being installed longitudinally on one of the two jaws, the tong body (3) being integral with the upper jaw (2); and
- a control and supply device (10) connected to the tongs (3) by a power cord (11) to supply each of the heating strips (15) with power,
**characterised in that** the control and supply device (10) has means of multiplexing the electrical energy sent into each of the heating strips (15), constituted in particular of a three mode controller of PID type (22), to send into said heating strips (15) successive energy waves and offset over time from one heating strip (15) in relation to another, in such a way that, at each instant, the electrical power is only sent to a single heating strip (15),
and **in that** the control and supply device (10) comprises means of modulating the pulse width.

2. Welding device according to claim 1,
**characterised in that** a thermocouple (16) is used for each heating strip (15) to carry out a temperature control.

3. Welding device according to claim 1,
**characterised in that** it comprises controlled motorisation means (11, 12, 13, 14) of the upper jaw (2) in relation to the lower jaw (1).

4. Welding device according to claim 3,
**characterised in that** the controlled motorisation means comprise:
- an electric motor (12) driving a screw-nut system (13, 14), the nut (14) being connected to the upper jaw (2); and
- means of limiting the tightening torque applied to the jaws (1, 2).

5. Device according to claim 1,
**characterised in that** the control and supply device (10) has an alternating current source.

6. Device according to claim 1,
**characterised in that** the control and supply device (10) has a direct current source by battery.

7. Method of heating a welding tong heating strip (15), each heating strip (15) being supplied with power individually, **characterised in that** it consists in sending into each heating strip (15) the successive waves of electrical energy and spaced in a determined manner and offset from one strip in relation to another, so that, at each instant, a single heating strip (15) is supplied with power.

8. Method according to claim 7, to heat a determined number N of heating strips (15), **characterised in that** the waves have a duration of 1/N, each wave being offset in relation to the others by a value of 1/N, so that the power sent overall into the assembly is constant, in other words that the energy is multiplexed.

9. Method of heating according to claim 8,
**characterised in that** a modulation of the width of the waves is carried out.

10. Method of heating according to claim 7,
**characterised in that** a measurement of the temperature of the heating strips is carried out.

## Patentansprüche

1. Schweißvorrichtung zum Schweißen der Öffnung von Kunststoffbeuteln, um sie luftdicht zu verschließen, und die Folgendes umfasst:
- eine Zange (3), die wiederum Folgendes umfasst:
. einen Zangenkörper (3);
. eine untere Backe (1); und
. eine obere Backe (2), die in Bezug auf die untere Backe (1) beweglich gelagert ist,
- mehrere Heizbänder (15), die längs auf einer der beiden Backen eingerichtet sind, wobei der Zangenkörper (3) fest mit der oberen Backe (2) verbunden ist; und
- eine Steuer- und Stromversorgungsvorrichtung (10), die über ein Stromversorgungskabel (11) mit der Zange (3) verbunden ist, um jedes der Heizbänder (15) mit Strom zu versorgen,
**dadurch gekennzeichnet, dass** die Steuer- und Stromversorgungsvorrichtung (10) Mittel zur Multiplexierung der in jedes der Heizbänder (15) beförderten elektrischen Energie besitzt, die insbesondere aus einem dreifach wirkenden Regler des Typs PID (22) gebildet sind, um in diese Heizbänder (15) aufeinander folgende und von einem Heizband (15) in Bezug auf das andere zeitlich versetzte Energiewellen zu befördern, derart, dass die elektrische Leistung zu jedem Zeitpunkt nur zu einem einzigen Heizband (15) befördert wird,
und **dadurch**, dass die Steuer- und Stromversorgungsvorrichtung (10) Mittel zur Modulation der Impulsbreite umfasst.

2. Schweißvorrichtung nach Anspruch 1, **dadurch gekennzeichnet, dass** für jedes Heizband (15) ein Thermoelement (16) zur Durchführung einer Temperaturkontrolle verwendet wird.

3. Schweißvorrichtung nach Anspruch 1, **dadurch gekennzeichnet, dass** sie Mittel zur gesteuerten Motorisierung (11, 12, 13, 14) der oberen Backe (2) in Bezug auf die untere Backe (1) umfasst.

4. Schweißvorrichtung nach Anspruch 3, **dadurch gekennzeichnet, dass** das Mittel zur gesteuerten Motorisierung Folgendes umfasst:
- einen Elektromotor (12), der ein Schraube-Mutter-System (13, 14) antreibt, wobei die Mutter (14) mit der oberen Backe (2) verbunden ist; und
- Mittel zur Begrenzung des an die Backen (1, 2) angelegten Anzugsmoments.

5. Vorrichtung nach Anspruch 1, **dadurch gekennzeichnet, dass** die Steuer- und Stromversorgungsvorrichtung (10) eine Wechselstromquelle besitzt.

6. Vorrichtung nach Anspruch 1, **dadurch gekennzeichnet, dass** die Steuer- und Stromversorgungsvorrichtung (10) eine Gleichstromquelle über Batterie besitzt.

7. Verfahren zum Heizen eines Heizbands (15) einer Schweißzange, wobei jedes Heizband (15) einzeln mit Strom versorgt wird, **dadurch gekennzeichnet, dass** es darin besteht, in jedes Heizband (15) aufeinander folgende und in bestimmten Abständen und von einem Band in Bezug auf das andere versetzte Wellen elektrischer Energie zu befördern, derart, dass zu jedem Zeitpunkt ein einziges Heizband (15) mit Strom versorgt wird.

8. Verfahren nach Anspruch 7 zum Heizen einer bestimmten Anzahl N von Heizbändern (15),
**dadurch gekennzeichnet, dass** die Wellen eine Dauer von 1/N aufweisen, wobei jede Welle in Bezug auf die anderen um einen Wert 1/N versetzt wird, damit die insgesamt in die Gruppe beförderte Leistung konstant ist, das heißt die Energie multiplexiert wird.

9. Heizverfahren nach Anspruch 8, **dadurch gekennzeichnet, dass** eine Modulation der Wellenlänge durchgeführt wird.

10. Heizverfahren nach Anspruch 7, **dadurch gekennzeichnet, dass** eine Messung der Temperatur der Heizbänder durchgeführt wird.
